# EUROPÄISCHE PATENTSCHRIFT

(11) **EP 1 406 138 B1**
(45) Veröffentlichungstag und Bekanntmachung des Hinweises auf die Patenterteilung: **13.12.2006**
(21) Anmeldenummer: 03022014.9
(22) Anmeldetag: 01.10.2003
(51) Int. Cl.: G05B 19/4097

(54) **Verfahren zur computergestützten Fertigung von Teilen zur Anwendung in der Sanierung, Rekonstruktion und Restaurierung**
Method for computer aided manufacturing of parts for use in refurbishment, reconstruction and restoration
Procédé de fabrication de pièces assistée par ordinateur destiné pour la réhabilitation, la réconstruction et la restauration

(30) Priorität: 02.10.2002 DE 10246897
(43) Veröffentlichungstag der Anmeldung: 07.04.2004
(73) Patentinhaber: Ehrich, Werner, 06688 Kleinkorbetha (DE)
(72) Erfinder: Ehrich, Werner, 06688 Kleinkorbetha (DE)
(74) Vertreter: Voigt, Wolf-Rüdiger

(56) Entgegenhaltungen:
- BREMER C: "KOMPRESSOR-UND TURBINENSCHAUFELN AUTOMATISCH REPARIEREN" WERKSTATT UND BETRIEB, CARL HANSER VERLAG. MUNCHEN, DE, Bd. 129, Nr. 7/8, August 1996 (1996-08), Seiten 672-674, XP000678763 ISSN: 0043-2792

## Beschreibung

Die Erfindung betrifft ein neues Verfahren von der Aufnahme von Schadbildern an Körpern und Konstruktionen allen urbanen Lebens, im Industriebau, an architektonischen, kulturhistorischen und bildhauerischen Kunst- und Bauwerken u. a. bis zum Wiederherstellen und Einfügen fehlender oder beschädigter Elemente von sonst in der Regel aufwendig zu bearbeitender oder völlig neu herzustellender, zusammenhängender Teile.
Mit dem Verfahren ist es technisch möglich und wirtschaftlich sinnvoll von der bisherigen Komplettfertigung wiederherzustellender Teile abzugehen und im Sinne des Entfernens schadhaften Materiales eines Teiles nur die verschlissene/fehlende Substanz nachzufertigen. Dies ist verfahrensgemäß in der Kopplung der CAD/CAM-Technologie und der CNC-Bearbeitungstechnik und / oder Robotertechnik umgesetzt.

Bereits mit dem heutigen Stand der Technik vermögen es CNC-Bearbeitungstechniken und der Einsatz von Robotern in großen Stückzahlen komplizierte geometrische Teile herzustellen, wobei hauptsächlich die Serienfertigung und der Neubau betrieben werden. Es werden immer komplette Teile bearbeitet und hergestellt und es wird nicht daran gedacht, insbesondere im Bauwesen und bei Kulturgütern Technologien zu entwickeln, die eine Reduzierung des Herstellungsaufwandes bei der Sanierung, Rekonstruktion sowie Restaurierung bewirken.
Auch zum gegenwärtigen Zeitpunkt ist es weit verbreitet z. B. im Rahmen der Sanierung historischer Substanz mit manueller Kleinarbeit und nur geringem Maschineneinsatz die architektonischen Besonderheiten wieder originalgetreu nachzuempfinden und die Verbindung der zu ersetzenden Bausubstanz mit der unversehrten herzustellen. Denkmalpflegerische und kulturhistorische Aspekte sind dabei in nicht unerheblichem Maße zu beachten.
Gerade derartige behutsam durchzuführende Baumaßnahmen sind sehr zeit- und kostenaufwendig und erfordern ein hohes handwerkliches Können.
Die Dokumentierung vorhandenen Bestandes vor dem Beginn von (Bau-)Maßnahmen wird heutzutage sehr detailgenau mittels digitaler Technik auch im 3D-Format vorgenommen. Diese Daten werden derzeit beim Austausch kompletter Teile zur Programmierung von CNC-gesteuerten Bearbeitungsmaschinen genutzt.

Bislang geht die Verknüpfung der zur Verfügung stehenden Technik davon aus, dass objektiv optisch erfassbare Schäden aufgezeichnet werden und technologisch, mittels der CNC-Technik, eine mit hoher Genauigkeit einhergehende Neufertigung vollzogen wird. Auch ein Gießen von z. B. entsprechenden Stuckteilen gemäß der in der Offenlegungsschrift DE 197 10 569 A1 geschilderten Lösung ist möglich.

Partielle und/oder verdeckte Schäden sind mit dieser Lösung nicht erfassbar- und maschinentechnisch nicht optimal umsetzbar.

In der Patentschrift DE 41 19 180 C2 wird ein universell einsetzbares Verfahren zur Aufzeichnung der Geometrie, Struktur- und Materialbeschaffenheit von dreidimensionalen Objekten, wie Fassaden und Räume sowie deren Wände, Einrichtungen und Installationen beschrieben. Das Aufzeichnen und Bearbeiten von Schädigungen in der "Tiefe" und die Verbindung zu einer diesem konkreten Schadbild entsprechenden Neufertigung in sehr individueller Ausführung findet hier nicht statt.

Auch in Bezug auf die mitgeteilte technische Lehre in der Offenlegungsschrift DE 198 16 706 A1 werden ein Verfahren und eine Vorrichtung zur Ermittlung der Maße eines Gebäudes oder eines Gebäudeteils vorgestellt, das sich digitaler Aufnahmetechnik bedient und nachfolgend die Aufnahmedaten in einem Computer eingelesen werden. Die entsprechend vorhandene Software des Computers bestimmt sodann wesentliche Parameter handwerklichen Arbeitens. Der handwerklich versierte Werker steht hier im Mittelpunkt, da er die optimierten Daten umsetzen muss und es lässt auch hier nicht ein unvorhergesehenes, auftretendes Schadbild in seinem individuellem Ausmaß im Vorfeld erkennen und anschließend problemlos bearbeiten.

Aus dem Artikel "Kompressor- und Turbinenschaufeln automatisch reparieren" von C. Brenner, erschienen in der Zeitschrifft "Werkstatt und Betrieb", 129, (1996) 7-8, ist ein System bekannt, das das automatische Bearbeiten aufgeschweißter Endbereiche von Kompressor- und Turbinenschaufeln ermöglicht.

Der vorbeschriebene Stand der Technik mit den beispielhaft dargelegten Schriften des Patentschrifttums lässt erkennen, dass die bereits mit den gegenwärtig nutzbaren Möglichkeiten bekannten Mittel nicht derartig miteinander kombiniert werden, dass kostengünstig die Aufnahmen von digitalen Daten, deren Umsetzung und Bearbeitung per Computer und eine an keine Geometrie gebundene CNC-programmierte oder robotergesteuerte Nachanfertigung durchgeführt wird.

Es ist daher Aufgabe der Erfindung, ein Verfahren vorzuschlagen, welches in erfindungsgemäßen Schritten "äußere und innere" Schadbilder berücksichtigt, eine computergemäße Modellierung des fertigen Neuteiles vornimmt und im Vergleich des letzteren mit dem bearbeiteten, in der Regel bar jeglichen Schadens "entkernten" Altteiles ein zu substituierendes "Differenzteil" entstehen lässt, das CNC- und / oder robotergestützt im Sinne des tatsächlich materiell zu ersetzenden Materials gefertigt wird und unter der Maßgabe minimierter manueller Arbeiten in die neu herzurichtende "entkernte" Substanz eingesetzt wird.

Erfindungsgemäß wird die Aufgabe wie folgt gelöst, wobei hinsichtlich der grundlegenden erfinderischen Gedanken auf den nach Merkmalen gegliederten Patentanspruch 1 verwiesen wird. Die weitere Ausgestaltung der Erfindung ergibt sich aus dem Patentanspruch 2.

Folgende ergänzende Hinweise zur erfindungsgemäßen Lehre sind erforderlich.

Das Verfahren wird schrittweise in nacheinander folgenden Stufen durchgeführt.

In einem ersten Verfahrensschritt wird die sichtbare Form eines Teiles digital aufgenommen und im Speicher eines Computers, der für die CAD-Technologie ausgelegt ist, gespeichert. In diesem Verfahrensschritt kann der an einem Teil optisch erfassbare, äußerliche Sanierungsbedarf mittels digitaler Technik in Form einer Bestandsaufnahme aufgenommen werden. Damit entsteht ein CAD-Aufmaß des Bestandes. Das in der Regel dem ehemals schadfreien Original nicht mehr entsprechende virtuelle Modell kann jetzt so modelliert werden, dass in einem 2. Verfahrensschritt die gewünschte virtuelle Endform als Zielstellung für die Fertigung einer realen Endform hervorgebracht wird.
Rückblickend auf das Resultat des 1. Verfahrensschrittes, erfolgt in einem 3. Verfahrensschritt die "Entkemung" des verschlissenen Teiles/der verschlissenen Substanz bis in die nicht geschädigten bzw. erhaltenswürdigen Bereiche entweder "vor Ort" durch einen Handwerker oder mittels computergestützter Maschinentechnik wie z.B. CNC-Maschinen der Roboter. Das Ergebnis dieses Schrittes ist das erhaltenswürdige Teil ( reale Erhaltform ).

In einem 4. Verfahrensschritt dient das nunmehr vorliegende und "vorbearbeitete" Teil d.h. der bearbeitete Bestand ( reale Erhaltform ) zu einer erneuten digitalen Erfassung. Es entsteht das erhaltenswürdige Teil in virtueller Form ( virtuelle Erhaltform ).
An dieser Stelle wird deutlich, dass die virtuelle Modellierung der gewünschten endgültigen Gesamtform ( virtuelle Endform ) am Anfang des Verfahrens oder nach stattgefundener "Entkernung" wahlweise eingefügt werden kann.

Nach dem v. g. 4. Verfahrensschritt folgt jetzt der das Verfahren prägende 5. Schritt, bei dem computergestützt von der virtuell berechneten Endform des 2. Verfahrensschrittes (virtuelle Endform) die virtuelle Erhaltform aus dem 4.Verfahrensschritt subtrahiert wird. Damit bleibt ein passgenau und neu zu formendes (spanend, spanlos, gußtechnisch) Differenzteil, die sogenannte virtuelle Neuform übrig, die mittels der Programmierung von CNC-gestützten Bearbeitungsmaßnahmen und / oder Robotertechnik in einem 6. Verfahrensschritt in die reale Neuform umgesetzt wird. Letztere kann als ein an sich fertiges Teil gelten, das in einem 7. Verfahrensschritt vor Ort mit minimierter Nacharbeit in das bestehende Teil ( reale Erhaltform ) ein- und angepasst wird.
Bei der Konzeption der virtuellen und realen Erhaltform und der als Gegenstück zu entwerfenden und zu fertigenden virtuellen/realen Neuform wird technologisch über bestmögliche und aufwandsminimierende Gestaltung und Befestigungen entschieden , damit in jedem Fall die Stabilität von Bau- oder Kunstwerken oder die Anforderungen an einzelne Teile gesichert bleibt. Auch dabei kann die Reihenfolge der Verfahrensschritte 2 bis 6 individuellen, örtlichen, praktischen, technischen oder anderen Vorgaben folgend, verändert werden.

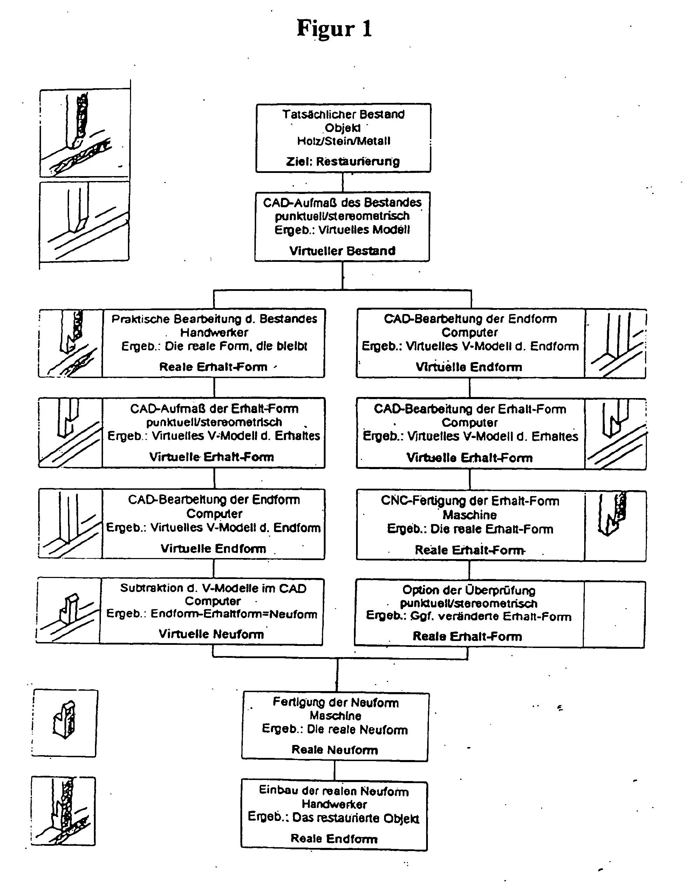

Die Erfindung soll nachfolgend anhand eines Ablaufschemas nach Figur 1 als zweckmäßiges Ausführungsbeispiel näher erläutert werden. Es stellt hier den Einsatz des Verfahrens bei der Fachwerksanierung vor.

Die darin verwendeten Begriffe sollen wie folgt näher erklärt werden:
- Erhaltform =: der Teil der in der Regel bearbeiteten Form, an dem ein Neuteil angefügt werden soll. Das ist z.B. der Bestand nach ggfs. notwendiger Bearbeitung.
- a.virtuell =: in digitalisierter Form
- b. real =: als tatsächlich anfassbares Teil
- Endform =: Gesamtform ( Bestand + Neuteil ), die das Ziel der Bearbeitung, Rekonstruktion usw. darstellt. Das ist die "reparierte" oder gewünschte Gesamtform.
- a. virtuell =: als digitales Modell im Computer
- b. real =: als restauriertes, saniertes, wiederhergestelltes Teil
- Neuform =: Das Teil, dass durch Subtraktion der zu erhaltenden Form ( bearbeiteter Bestand ) von der beabsichtigten Endform entsteht. Das ist das passende Reparatur- oder Ersatzteil.
- a. virtuell =: als digitales Modell im Computer
- b. real =: als vorwiegend maschinen- oder robotergefertigtes Reparatur- oder Ersatzteil

Das in mehreren Schritten nacheinander vollziehbare Verfahren ist bearbeitungstechnisch an keine Materialart gebunden und kann übergreifend für alle denkbaren geometrischen Nachformungen an Körpern bzw. betreffenden Teilen von diesen, Tragkonstruktionen, Kunstwerken der Architektur, der bildenden Künste usw. eingesetzt werden. Es ist auch für Negativ- und Gussformen wie sie z.B. für Stuckarbeiten gebräuchlich sind ,anwendbar.

Im ersten Verfahrensschritt findet die Aufnahme des Schadbildes als virtuelle Bestandssicherung mittels bekannter digitaler, insbesondere 3D-Technik, statt. Die Ablage derselben in einer mit CAD-Funktion unterlegten Computertechnik erlaubt es schon an dieser Stelle oder zu einem späteren Zeitpunkt, das aufgenommene Schadbild soweit zu bearbeiten, dass der gewünschte Endzustand - die als solche zu bezeichnende virtuelle Endform - sichtbar gemacht wird.
Die weiteren bereits beschriebenen Verfahrenschritte schliessen sich hier an.

Folgende Vorteile charakterisiert das Verfahren zusammenfassend:
- "freies" Bearbeiten eines schadhaften Teils bis auf die erhaltenswürdige Substanz
- hohe Flexibilität und freie Modellierung bei der virtuellen Bearbeitung maximaler Erhalt an Originalsubstanz
- hohe Fertigungsgenauigkeit und schnellere Fertigung
- Einsparung von Montagezeit durch maschinengestütztes Herausarbeiten von groben und / oder feinen Formen und Wegfall eines großen Teils von Anpass- und Nacharbeiten
- keine Materialbearbeitungsbeschränkungen

Es bleibt festzustellen, dass der erfinderische Gehalt des Verfahrens auch unter dem Gesichtspunkt Bestand hat, wenn CNC-Bearbeitungstechniken miniaturisiert werden und das Verfahren somit unter Baustellenbedingungen, ähnlich der Entwicklung von Schweißrobotern im Maschinenbau ausführbar ist.

## Patentansprüche

1. Verfahren zur computergestützten Fertigung von Teilen zur Anwendung in der Sanierung, Rekonstruktion und Restaurierung, **gekennzeichnet dadurch ,dass** in einem
1. Verfahrensschritt eine digitale Aufnahme des Bestandes durchgeführt wird, mit der ein virtuelles Modell entwickelt wird (virtueller Bestand)
in einem
2. Verfahrensschritt der digitalisierte Bestand (virtuelle Bestand) so bearbeitet wird, dass die gewünschte Gesamtform digital vorliegt (virtuelle Endform)
in einem
3. Verfahrensschritt der vorhandene materielle Bestand handwerklich, maschinen- oder robotergestützt so bearbeitet wird, dass ein Ergänzungsteil (reale Neuform) eingefügt werden kann, wobei nicht erhaltenswürdige Substanz entfernt wird und die erhaltenswürdige Substanz übrig bleibt (reale Erhaltform)
in einem
4. Verfahrensschritt der materiell bearbeitete Bestand (reale Erhaltform) erneut digital erfasst wird, so dass ein virtuelles Modell des bearbeiteten Bestandes entwickelt werden kann (virtuelle Erhaltform)
in einem
5. Verfahrensschritt die virtuelle Erhaltform von der virtuellen Endform subtrahiert wird und die neu zu fertigende und einzusetzende Form virtuell vorliegt (virtuelle Neuform) in einem
6. Verfahrensschritt aus der virtuellen Neuform das einzusetzende Teil maschinen- und / oder robotergestützt gefertigt wird (reale Neuform)
in einem
7. Verfahrensschritt das bestehende Teil des Bestandes (reale Erhaltform) und das einzusetzende Neuteil (reale Neuform) zusammengefügt werden und die gewünschte Gesamtform - ggf. mit handwerklicher Nacharbeit- erreicht ist.

2. Verfahren zur computergestützten Fertigung von Teilen nach Anspruch 1, **gekennzeichnet dadurch, dass** die Reihenfolge der angegebenen Verfahrenschritte 2 bis 6 nach individuellen, örtlichen, praktischen o.a. Vorgaben frei gewählt werden kann

## Claims

1. Process for the computer-aided manufacture of parts to be used for redevelopment, reconstruction or restoration purposes, **characterized in that**
in a 1^{st} process step, the stock is surveyed by digital means and developed into a virtual model (virtual stock), and
in a 2^{nd} process step, the digitalized stock (virtual stock) is processed so that the desired overall result is obtained in digital form (virtual final form), and
in a 3^{rd} process step, the existing material stock is processed by manual, mechanical or robotic-aided means so that a supplementary part (real new form) may be included, with matter not worth being maintained to be removed so that only matter worth being preserved remains (real preservation form), and
in a 4^{th} process step, the materially processed stock (real preservation form) is again surveyed by digital means so that a virtual model of the processed stock may be developed (virtual preservation form), and
in a 5^{th} process step, the virtual preservation form is subtracted from the virtual final form resulting in the virtual form to be manufactured and inserted (virtual new form), and
in a 6^{th} process step, the part to be inserted is manufactured by mechanical and/or robotic-aided means (real new form), and
in a 7^{th} process step, the existing part of stock (real preservation form) and the new part to be inserted (real new form) are joined together to obtain the desired overall result, with some manual finishing if required.

2. Process for the computer-aided manufacture of parts according to claim 1, **characterized in that** the sequence of the above process steps 2 - 6 may be freely altered to match with individual, local, practical, etc. requirements and specifications.

## Revendications

1. Procédé pour la fabrication assistée par ordinateur de pièces destinées à être utilisées dans la rénovation, la reconstruction et la restauration, **caractérisé en ce que**, au cours d'une
1^{ère} étape de procédé, une prise de vue numérique de l'inventaire permettant de mettre au point un modèle virtuel (inventaire virtuel) est réalisée, au cours d'une
2^{ème} étape de procédé, l'inventaire numérisé (inventaire virtuel) est traité de sorte à obtenir sous forme numérique la forme d'ensemble souhaitée (forme virtuelle finale), au cours d'une
3^{ème} étape de procédé, l'inventaire matériel existant est traité par des artisans, avec l'assistance de machines ou de robots de sorte à pouvoir y insérer une pièce complémentaire (forme réelle nouvelle), en enlevant toute substance qui ne vaut pas la peine d'être gardée et en conservant toute substance qui vaut la peine d'être gardée (forme réelle obtenue), au cours d'une
4^{ème} étape de procédé, l'inventaire matériel traité (forme réelle obtenue) est de nouveau recensé sous forme numérique de sorte à pouvoir mettre au point un modèle virtuel de l'inventaire traité (forme virtuelle obtenue), au cours d'une
5^{ème} étape de procédé, la forme virtuelle obtenue est enlevée de la forme virtuelle finale, et la forme à reproduire et à réutiliser est disponible sous forme virtuelle (forme virtuelle nouvelle), au cours d'une
6^{ème} étape de procédé, la pièce à utiliser est fabriquée à partir de la forme virtuelle nouvelle avec l'assistance de machines et/ou de robots (forme réelle nouvelle), au cours d'une
7^{ème} étape de procédé, la pièce existante de l'inventaire (forme réelle obtenue) et la nouvelle pièce à utiliser (forme réelle nouvelle) sont réunies, et la forme d'ensemble souhaitée est obtenue, le cas échéant à l'aide de retouches effectuées par les artisans.

2. Procédé pour la fabrication assistée par ordinateur de pièces selon la revendication 1, **caractérisé en ce que** l'ordre des étapes de procédé indiquées 2 à 6 peut être choisi librement selon les contraintes de choix, de lieu, de pratique, ou autres.
